# EUROPEAN PATENT APPLICATION

(11) **EP 1 662 826 A1**
(43) Date of publication of application: **31.05.2006**
(21) Application number: 05026154.4
(22) Date of filing: 30.11.2005
(51) Int. Cl.: H04Q 7/36

(54) **Method for adaptively allocating frequency resource in an OFDMA communication system**

(30) Priority: 30.11.2004 KR 2004099561
(71) Applicant: Samsung Electronics Co., Ltd., Suwon-si, Gyeonggi-Do (KR); Korea Advanced Institute of Science and Technology (KAIST), Daejon (KR)
(72) Inventor: Jung, Young-Ho, Yeongtong-gu Suwon-si Gyeonggi-do (KR); Chung, Jae-Hak, Yeongtong-gu Suwon-si Gyeonggi-do (KR); Nam, Woo-Seok, Yeonje-gu Gusan (KR); Yun, Jae-Yeun, Bucheon-si Gyeonggi-do (KR); Lee, Yong-Hoon, Yuseong-gu Daejeon (KR)
(74) Representative: Grünecker, Kinkeldey, Stockmair & Schwanhäusser Anwaltssozietät

(57) **Abstract**

Disclosed is a method for adaptively allocating frequency resources in a communication system using an orthogonal frequency division multiple access scheme. The method for allocating frequency resources in the communication system that includes a plurality of cells using an identical frequency band includes the steps of dividing a frequency band used in the communication system into sub-frequency bands corresponding to a number of cells, and allocating one of the sub-frequency bands to each of mobile subscriber stations existing in the cells according to positions of the mobile subscriber stations, thereby increasing the degree of the freedom for frequency resource allocation and minimizing ICI.

## Description

The present invention relates to a communication system using an orthogonal frequency division multiple access (OFDMA) scheme, and more particularly to a method and an apparatus for adaptively allocating frequency resources according to a cell loading rate and a position of a mobile subscriber station (MSS) in a cell.

An IEEE 802.16a and an IEEE 802.16e communication system are systems using an orthogonal frequency division multiplexing (OFDM)/orthogonal frequency division multiple access (OFDMA) scheme for a physical channel of the wireless Metropolitan Area Network (WMAN) system in order to support a broadband transmission network. The IEEE 802.16a communication system is a system for only a single structure without incorporating the mobility of a Subscriber Station (SS), in which the SS is in a stationary state. In contrast, the IEEE 802.16e communication system is a system realized by supplementing the IEEE 802.16a communication system with the ability to incorporate the mobility of the SS, and, hereinafter, the SS with mobility will be referred to as a mobile subscriber station (MSS).

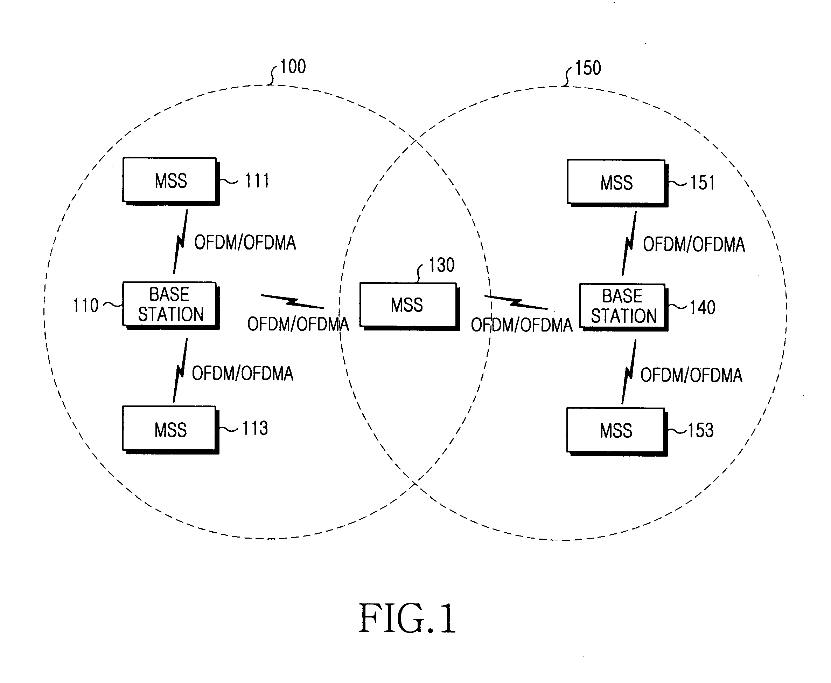

FIG. 1 shows a block diagram illustrating a structure of a typical IEEE 802.16e communication system

The IEEE 802.16e communication system has a multi-cell structure and includes a cell 100, a cell 150, a base station 110 controlling the cell 100, a base station 140 controlling the cell 150, and a plurality of MSSs 111, 113, 130, 151, and 153. In addition, the base stations 110 and 140 transmit/receive signals to/from the MSSs 111, 113, 130, 151, and 153 using the OFDM/OFDMA scheme. The MSS 130 is positioned at the border between the cell 100 and the cell 150 (i.e., a handover area). In other words, if the MSS 130 moves to the cell 150 controlled by the base station 140 while communicating with the base station 110, a serving base station of the MSS 130 is changed into the base station 140 from the base station 110.

Since a communication system having a cellular structure (hereinafter, referred to as "cellular communication system") distributes restricted resources such as frequency resources, code resources, and time slot resources to a plurality of cells included in the cellular communication system, Inter Cell Interference (ICI) is caused. Since even the IEEE 802.16e communication system is a type of the cellular communication system, the IEEE 802.16e communication system will be described as an example of the cellular communication system.

Although the performance of the IEEE 802.16e communication system is degraded due to the ICI phenomenon when the frequency resources are distributed to a plurality of cells in the IEEE 802.16e communication system, the IEEE 802.16e communication system may reuse the frequency resources in order to increase the entire capacity of the system. A rate at which the frequency resources are reused is referred to as a "frequency reuse factor". The frequency reuse factor is determined based on the number of cells making a tier of 1 which do not use the same frequency resource. On an assumption that the frequency reuse factor is 'K', if the number of cells making a tier of 1, which do not use the same frequency resource, is '3', the frequency reuse factor K is 1/3.

Although a lowered frequency reuse factor (that is, a frequency reuse factor less than 1 (K<1)) reduces the ICI, the amount of available frequency resources in one cell decreases, so that the entire capacity of the IEEE 802.16e communication system decreases. In contrast, although the frequency reuse factor K of 1 (i.e., the use of all cells included in the IEEE 802.16e communication system for the same frequency resource) increases the ICI, the amount of available frequency resources in one cell increases, so that the entire capacity of the IEEE 802.16e communication system increases.

Frequency resource allocation using frequency reuse factors set to '1' and set to a value less than '1' in the IEEE 802.16e communication system will now be described.

When frequency resources are assigned by setting the frequency reuse factor to '1' (K=1), all frequency resources (i.e., sub-carriers) used in each cell included in the IEEE 802.16e communication system may be used for neighbor cells. In this case, if all cells included in the IEEE 802.16e communication system use the same sub-carrier, interference may not occur between the sub-carriers commonly used by the cells.

When frequency resources are allocated by setting the frequency reuse factor to a value less than '1' (K<1), the IEEE 802.16e communication system may divide the same frequency band into K sub-frequency bands so as to distribute the K sub-frequency bands to K cells. In addition, the IEEE 802.16e communication system may distribute K different frequency bands to the K cells. As described above, when frequency resources are allocated by setting the frequency reuse factor to a value less than '1' (K<1), ICI caused between neighbor cells is minimized because the same frequency resource is reused based on a unit of K cells. An example, in which the IEEE 802.16e communication system divides the same frequency band into K sub-frequency bands to be distributed to K cells when frequency resources are allocated by setting the frequency reuse factor to a value less than '1' (K<1), will now be described.

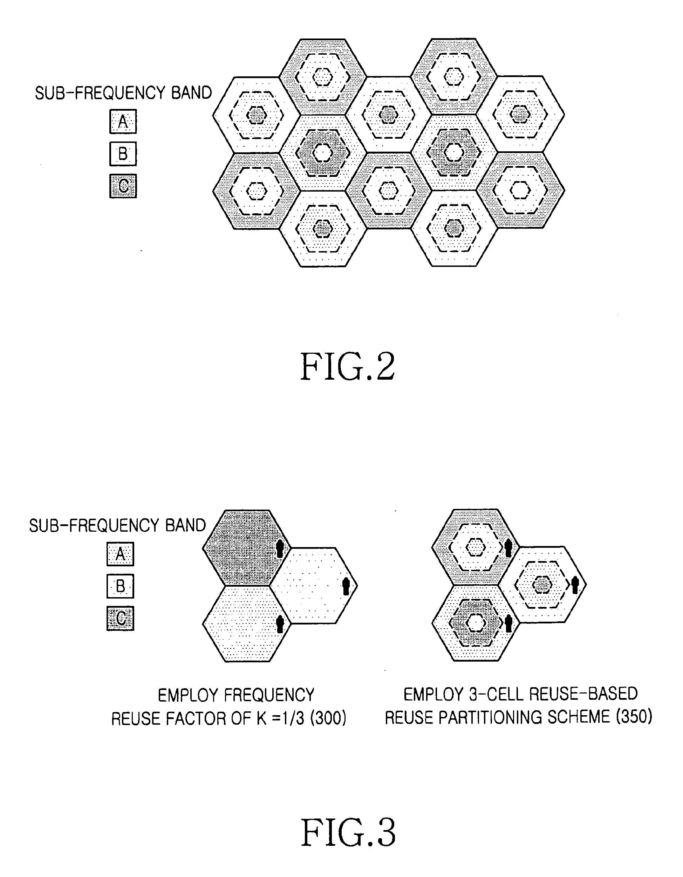

In each case of allocating the frequency resources by setting the frequency reuse factor to either '1' or a value less than '1', the frequency reuse factor must be set to '1' in view of the efficiency of frequency resources (that is, the entire capacity of the IEEE 802.16e communication system) regardless of advantages and disadvantages of each case. Accordingly, in order to overcome a problem caused due to the frequency reuse factor of '1' (that is, a problem caused due to the occurrence of ICI), an interference suppression scheme and a reuse partitioning scheme are employed. However, since the interference suppression scheme must estimate channels of neighboring cells, an amount of operations for channel estimation of neighboring cells may increase, so the reuse partitioning scheme is mainly employed. Frequency resource allocation when the IEEE 802.16e communication system employs the reuse partitioning scheme will be described with reference to FIG. 2.

FIG. 2 illustrates frequency resource allocation when the typical IEEE 802.16e communication system employs the reuse partitioning scheme.

The reuse partitioning scheme has been suggested in order to minimize the occurrence of the ICI while allocating frequency resources by setting a frequency reuse factor to '1'. A K-cell reuse-based reuse partitioning scheme will now be described.

When the K-cell reuse-based reuse partitioning scheme is employed, one cell is divided into K sub-cells having the same area and being concentrically aligned, and the K sub-cells are allocated mutually exclusive frequency resources (i.e., sub-carriers). The K sub-cells has a fixed size corresponding to a distance from a base station (i.e., a cell center), and the number of MSSs managed by each of K sub-cells corresponds to 1/K of the number of total MSSs managed by the base station (i.e., the cell). In more detail, when the K-cell reuse-based reuse partitioning scheme is employed, one cell is divided into K cells having the fixed size according to distances separated from the base station. The number of MSSs managed by each of K sub-cells corresponds to 1/K of the maximum number of the total MSSs managed by the base station.

FIG. 2 is a view illustrating frequency resource allocation when a 3-cell reuse-based reuse partitioning scheme is employed. One cell is divided into 3 sub-cells being concentrically aligned, and mutually exclusive frequency resources are allocated to the 3 sub-cells. The number of MSSs managed by each of 3 sub-cells corresponds to 1/3 of the number of the total MSSs managed by the cell. Accordingly, although each of 3 sub-cells making one predetermined cell has an efficiency identical to that of each of 3 sub-cells of each neighboring cell when a frequency reuse factor of 1/3 is applied thereto, an actual frequency reuse factor of each of sub-cells becomes '1' because all frequency resources allocated to the one predetermined cell are completely used.

However, as described with reference to FIG. 2, when the 3-cell reuse-based reuse partitioning scheme is employed, since each corresponding cell is divided into three regions having fixed size (i.e., three sub-cells), and each of 3 sub-cells can use only 1/3 of the available frequency resources, the degree of freedom for frequency resource allocation is degraded. In other words, each of 3 sub-cells supports only 1/3 of the maximum number of MSSs managed by the corresponding cell. Accordingly, if MSSs exceeding 1/3 of the maximum number of MSSs managed by the cell exist in one sub-cell, the MSSs cannot be allocated frequency resources, thereby degrading the degree of freedom for frequency resource allocation.

When the reuse partitioning scheme is employed, the degree of the freedom of the frequency resource allocation is not only lowered, but the ICI may also increase according to the position of an MSS even though a cell loading rate of a corresponding cell is lowered.

FIG. 3 illustrates the occurrence of the ICI according to the cell loading rate when the typical IEEE 802.16e communication system employs the reuse partitioning scheme, and an MSS of each cell exists in the same sub-cell.

In FIG. 3, it is assumed that the number of MSSs managed by each cell is '3', a cell loading rate of each cell is '1/3', and an MSS in each cell exists in the same sub-cell when the IEEE 802.16e communication system employs the reuse partitioning scheme. The optimum scheme of allocating frequency resources, which prevents the occurrence of the ICI, when a cell loading rate of each cell is 1/3 in the IEEE 802.16e communication system is a scheme of allocating frequency resources by setting a frequency reuse factor to 1/3. In other words, when a cell loading rate of each cell is 1/3, three MSSs existing one in each of three neighbor cells, are allocated mutually different frequency. resources in order to prevent the occurrence of the ICI (reference numeral 300).

In addition, when the 3-cell reuse-based reuse partitioning scheme is employed in a case of the cell loading rate of 1/3, and when MSSs existing in three neighboring cells exist in the same sub-cell, the ICI is not caused (reference numeral 350). In this case, although the 3-cell reuse-based reuse partitioning scheme is employed, the system actually obtains a gain identical to that obtained when a frequency reuse factor is set to 1/3 in view of the ICI.

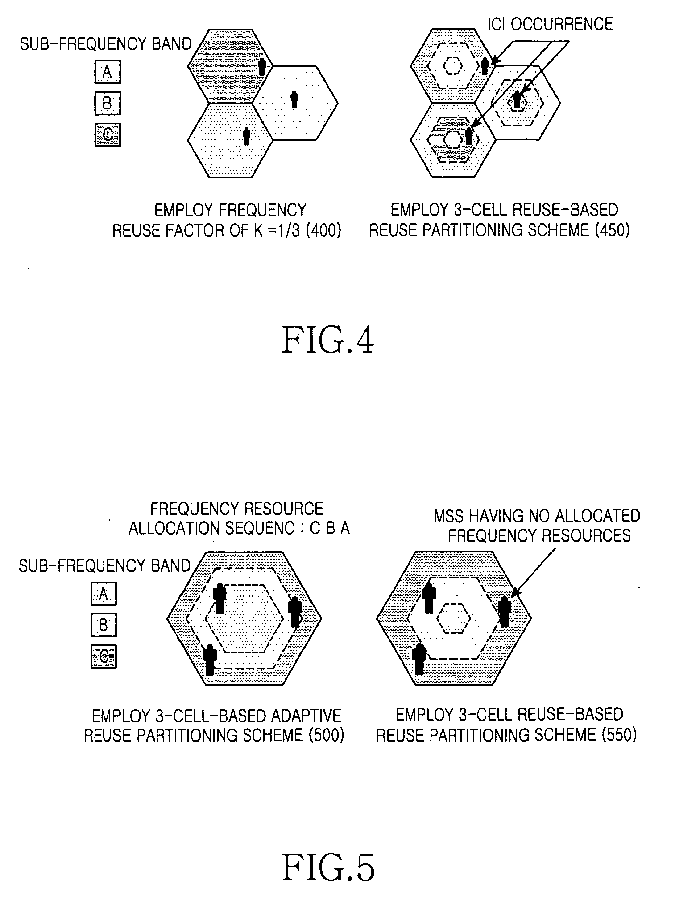

FIG. 4 illustrates the occurrence of the ICI according to cell loading rates when the typical IEEE 802.16e communication system employs the reuse partitioning scheme, and when each MSS of each cell exists in sub-cells different from each other.

In FIG. 4, it is assumed that the number of MSSs managed by each cell is '3', a cell loading rate of each cell is '1/3', and each MSS in each cell exists in sub-cells different from each other when the IEEE 802.16e communication system employs the reuse partitioning scheme. The optimum scheme of allocating frequency resources, which prevents the occurrence of the ICI, when a cell loading rate of each cell is 1/3 in the IEEE 802.16e communication system is a scheme of allocating frequency resources by setting a frequency reuse factor to 1/3. In other words, when a cell loading rate of each cell is 1/3, three MSSs existing one in each of three neighboring cells, must be allocated mutually different frequency resources in order to prevent the occurrence of the ICI (reference numeral 400).

In addition, when the 3-cell reuse-based reuse partitioning scheme is employed in a case of the cell loading rate of 1/3, and when the MSSs in the three neighboring cells exist in the same sub-cell, the ICI is not caused. However, the MSSs in the three neighboring cells exist in different sub-cells, the ICI occurs (reference numeral 450). In this case, although the 3-cell reuse-based reuse partitioning scheme is employed, the performance of the system is more degraded as compared with a case of setting a frequency reuse factor to 1/3 in view of the ICI.

As described above, when the K-cell reuse-based reuse partitioning scheme is employed, the degree of freedom for the frequency resource allocation is restricted according to distances from a base station. In addition, when MSSs in K neighboring cells exist in mutually different cells, the performance of the system is degraded in view of ICI. Accordingly, it is necessary to suggest a new scheme of allocating frequency resources, which prevent ICI performance degradation without the restriction of the degree of the freedom for the frequency resource allocation.

Accordingly, the present invention has been made to solve at least the above-mentioned problems occurring in the prior art.

It is the object of the present invention to provide a method for allocating frequency resources which can ensure the degree of freedom for frequency resource allocation in an OFDMA communication system.

This object is solved by the subject matter of the independent claims.

Preferred embodiments are defined in the dependent claims.

An aspect of the present invention is to provide a method for allocating frequency resources which can minimize the occurrence of ICI in an OFDMA communication system.

Another aspect of the present invention is to provide a method for allocating frequency resources which can minimize the occurrence of ICI according to cell loading rates in an OFDMA communication system.

To accomplish the above, there is provided a method for adaptively allocating frequency resources in a communication system using an orthogonal frequency division multiple access (OFDMA) scheme, the method includes dividing a cell into a plurality of sub-cells corresponding to positions of mobile subscriber stations (MSS) existing in the cell, dividing a frequency band used in the communication system into sub-frequency bands corresponding to the number of the plurality of sub-cells, and allocating the sub-frequency bands to the plurality of sub-cells in such a manner that the sub-cells corresponds to the sub-frequency bands in a ratio of 1:1.

According to another aspect of the present invention, there is provided a method for adaptively allocating frequency resources in a communication system using an orthogonal frequency division multiple access (OFDMA) scheme, the method includes dividing a frequency band used in the communication system by a number of sub-frequency bands, and allocating one of the sub-frequency bands to each of mobile subscriber stations exiting in a cell according to positions of the mobile subscriber stations.

According to still another aspect of the present invention, there is provided a method for adaptively allocating frequency resources in a communication system using an orthogonal frequency division multiple access (OFDMA) scheme, the communication system includes a plurality of cells using an identical frequency band, the method includes dividing a frequency band used in the communication system into sub-frequency bands corresponding to the number of cells, and allocating one of the sub-frequency bands to each of mobile subscriber stations exiting in the cells according to positions of the mobile subscriber stations.

According to yet another aspect of the present invention, there is provided an apparatus that is adapted to operate according to the above methods.

The present invention will be more apparent from the following detailed description taken in conjunction with the accompanying drawings, in which:
FIG. 1 shows a block diagram illustrating a structure of a typical IEEE 802.16e communication system;
FIG. 2 illustrates frequency resource allocation when a typical IEEE 802.16e communication system employs a reuse partitioning scheme;
FIG. 3 illustrates the occurrence of ICI according to cell loading rates when a typical IEEE 802.16e communication system employs a reuse partitioning scheme, and an MSS of each cell exists in the same sub-cell;
FIG. 4 illustrates the occurrence of ICI according to cell loading rates when a typical IEEE 802.16e communication system employs a reuse partitioning scheme, and when each MSS of each cell exists in sub-cells different from each other;
FIG. 5 illustrates frequency resource allocation when an IEEE 802.16e communication system according to an embodiment of the present invention uses a reuse partitioning scheme;
FIG. 6 illustrates the occurrence of ICI according to cell loading rates when an IEEE 802.16e communication system according to an embodiment of the present invention employs an adaptive reuse partitioning scheme;
FIG. 7 illustrates frequency resource allocation when an IEEE 802.16e communication system according to an embodiment of the present invention employs a K-cell reuse-based adaptive reuse partitioning scheme, and a cell loading rate of each cell is 1/K;
FIG. 8 illustrates a frequency resource allocation sequence; and
FIG. 9 shows a graph illustrating the uplink SINR performance comparison of both cases.

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

The present invention suggests a method for allocating frequency resources which can minimize inter cell interference (ICI) according to cell loading rates while ensuring the degree of freedom for frequency resource allocation according to the position of a mobile subscriber station (MSS) in a communication system employing an orthogonal frequency division multiple access (OFDMA) scheme (e.g., an Institute of Electrical and Electronics Engineers (IEEE) 802.16e communication system). Although a method for allocating frequency resources will be described by employing the IEEE 802.16e communication system as an example herein, it is natural that the method suggested in the present invention may be employed for other communication systems using the OFDMA scheme.

FIG. 5 illustrates frequency resource allocation when the IEEE 802.16e communication system according to an embodiment of the present invention uses a reuse partitioning scheme.

Prior to the description about FIG. 5, a typical reuse partitioning scheme will be described.

As described in the conventional technique, the reuse partitioning scheme is suggested for minimizing the occurrence of ICI while allocating frequency resources by setting a frequency reuse factor to 1. In particular, when a K-cell reuse-based reuse partitioning scheme is employed as the reuse partitioning scheme, one cell is divided into K sub-cells having the same area and being concentrically aligned, and each of the K sub-cells is allocated mutually exclusive frequency resources (i.e., sub-carriers). The K sub-cells have fixed sizes according to distances from a base station (i.e., a cell center). In addition, the number of MSSs managed by each of the K sub-cells corresponds to 1/K of the number of total MSSs managed by the base station. In more detail, when the K sub-cell reuse-based reuse partitioning scheme is employed, one cell is divided into K sub-cells having the fixed area according to distances from the base station. The number of MSSs managed by each of the K sub-cells corresponds to 1/K of the number of the total MSSs managed by the base station. Accordingly, since each of the K sub-cells may use only 1/K of the whole frequency resources when the K sub-cell reuse-based reuse partitioning scheme is employed, the degree of freedom for the frequency resource allocation may be degraded. In addition, although a cell loading rate of a corresponding cell is lowered, the ICI may increase according to positions of the MSSs.

The present invention suggests a new method for allocating frequency resources, which minimizes the occurrence of ICI according to cell loading rates while preventing the degradation of the degree of the freedom for frequency resource allocation. The new method will be described below with reference to FIG. 5. A new reuse partitioning scheme suggested in the present invention will be referred as an "adaptive reuse partitioning scheme", and a typical reuse partitioning scheme will be referred to as a "fixture reuse partitioning scheme".

When the adaptive reuse partitioning scheme (i.e., a K-cell reuse-based reuse partitioning scheme) is employed, one cell may be divided into K sub-cells having a concentric shape according to the positions of K MSSs existing in the cell, and each of the K sub-cells may be allocated mutually exclusive frequency resources (i.e., sub-carriers). The K sub-cells have variable sizes according to the positions of the MSSs instead of fixed sizes according to distances from a base station (i.e., a cell center). Accordingly, although the number of MSSs managed by each of K sub-cells corresponds to the number of the total MSS managed by a base station, since the K sub-cells are formed through the division according to positions of the MSSs instead of distances from a base station (i.e., a cell center), the degree of freedom for frequency resource allocation increases.

FIG. 5 illustrates frequency resource allocation 500 through a 3-cell reuse-based adaptive reuse partitioning scheme and frequency resource allocation 550 through a three-cell reuse-based reuse partitioning scheme when the number of MSSs managed by a corresponding cell is three in the IEEE 802.16e communication system. First, when the frequency resource allocation 550 through the three-cell reuse-based reuse partitioning scheme is employed, one cell is divided into three sub-cells having the same area and being concentrically aligned according to distances from the center of the base station. In this case, a sub-cell allocated a frequency band of C has two MSSs, and one of the two MSSs cannot be allocated a frequency resource, so that the degree of freedom for frequency resource allocation is lowered.

Different from the frequency resource allocation 550, when the frequency resource allocation 500 through the 3-cell reuse-based adaptive reuse partitioning scheme is employed, one cell is divided into three sub-cells in a concentric shape based on the center of the base station according to the positions of MSSs. In this case, since each sub-cell has only one MSS, all MSSs in the corresponding cells are allocated frequency resources. As a result, this scheme improves the degree of freedom for frequency resource allocation.

In other words, when one cell is divided into K sub-cells, the adaptive reuse partitioning scheme suggested in the present invention adaptively determines the division into the K sub-cells based on MSS distribution (i.e., the positions of MSSs) instead of an absolute distance from the center of the base station, thereby improving the degree of freedom for frequency resource allocation.

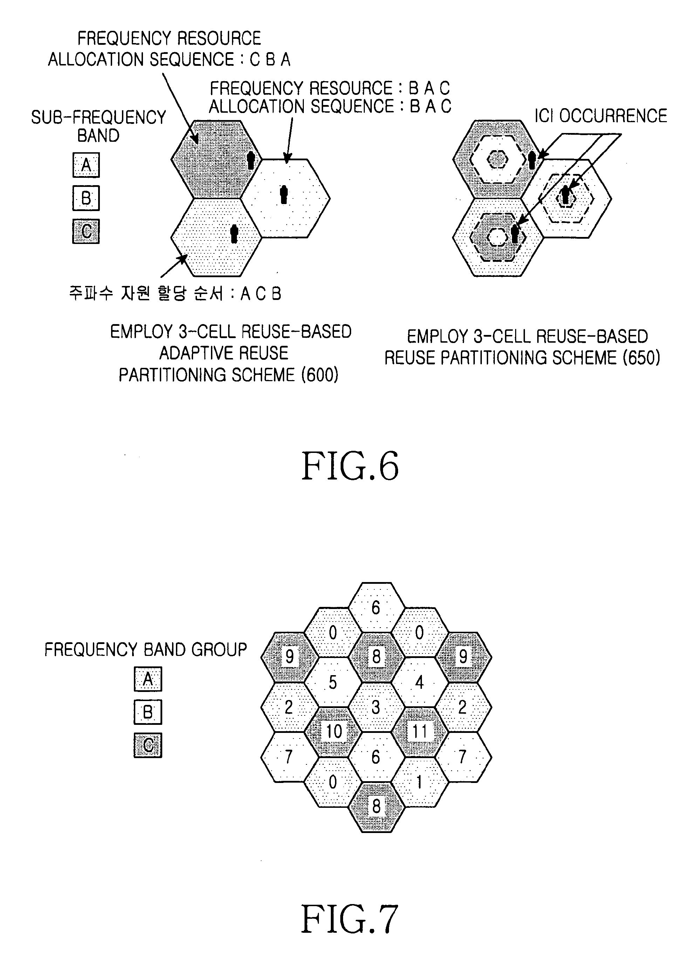

FIG. 6 illustrates the occurrence of the ICI according to cell loading rates when the IEEE 802.16e communication system according to an embodiment of the present invention employs the adaptive reuse partitioning scheme.

In FIG. 6, it is assumed that the number of MSSs managed by each cell is '3', and a cell loading rate of each cell is '1/3' when the IEEE 802.16e communication system employs the reuse partitioning scheme. In addition, when the 3-cell reuse-based reuse partitioning scheme is employed in a case of the cell loading rate of 1/3, and when MSSs, one existing in each of three neighbor cells, exist in different sub-cells, the ICI is caused (reference numeral 650). In this case, although the 3-cell reuse-based reuse partitioning scheme is employed, the performance of the system is degraded as compared with a case of setting a frequency reuse factor to 1/3 in view of the ICI.

Differently from the 3-cell reuse-based reuse partitioning scheme, when the 3-cell reuse-based adaptive reuse partitioning scheme is employed in the case of a cell loading rate of 1/3, MSSs, one existing in each of three neighbor cells, are allocated mutually different frequency resources, thereby preventing the occurrence of the ICI. In other words, since each cell is divided into sub-cells according to the positions of the MSSs, and a current cell loading rate is 1/3, if frequency resource allocation sequence is different, the ICI may not occur (reference numeral 600). Although the 3-cell reuse-based adaptive reuse partitioning scheme is used, this case actually obtains the same gain as in the case of a frequency reuse factor of 1/3 in view of the ICI.

In other words, since a corresponding cell is divided into sub-cells having variable sizes according to the positions of MSSs instead of fixed sizes according to distances from a base station, when the adaptive reuse partitioning scheme suggested in the present invention is employed, the number of sub-cells is determined according to the number of the MSSs existing in the corresponding cell (i.e., a cell loading rate). In addition, the sub-cells obtained through the adaptive reuse partitioning scheme is not physically divided, but is divided in frequency resource allocation sequence. Accordingly, a case in which cells are not divided into sub-cells (that is, a case in which the cell loading rate is 1/K) obtains the same efficiency as a case of a frequency reuse factor of 1/K if K cells are sequentially allocated sub-frequency bands.

FIG. 7 illustrates frequency resource allocation when the IEEE 802.16e communication system according to an embodiment of the present invention employs the K-cell reuse-based adaptive reuse partitioning scheme, and a cell loading rate of each cell is 1/K.

Prior to description about FIG. 7, although each cell is divided into K sub-cells according to the positions of MSSs existing in each cell when the K-cell reuse-based adaptive reuse partitioning scheme is employed, since a cell loading rate of each cell is 1/K, each cell can divide a frequency band used in the IEEE 802.16e communication system into K sub-frequency bands and allocate one of K sub frequency bands to an MSS.

In FIG. 7, since each cell has a cell loading rate of 1/12 when 12-cell reuse-based adaptive reuse partitioning scheme is employed, 12 cells can divide a frequency band used in the IEEE 802.16e communication system into 12 sub-frequency bands and allocate one of the 12-sub frequency bands to an MSS. In FIG. 7, it is assumed that the four sub-frequency bands of the 12 sub-frequency bands are made as one frequency band group so that a total of three frequency band groups can be created. Accordingly, it is enough for the 12 cells to allocate corresponding sub-frequency bands to MSSs according to preset frequency resource allocation sequence.

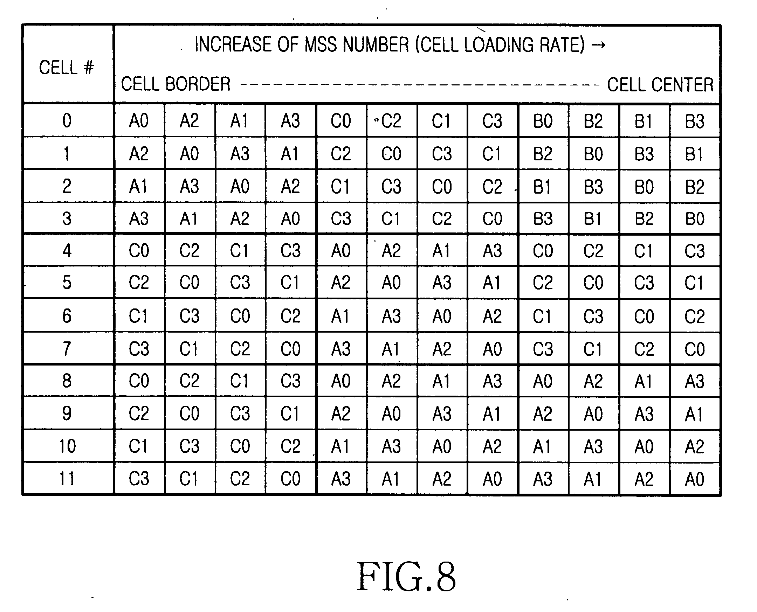

FIG. 8 illustrates the frequency resource allocation sequence, and more particularly to frequency resource allocation when the IEEE 802.16e communication system uses a K-cell reuse-based adaptive reuse partitioning scheme, and a cell loading rate of each cell sequentially increases from 1/K to 1. Since the 12-cell reuse-based adaptive reuse partitioning scheme described with reference to FIG. 7 is employed as the adaptive reuse partitioning scheme in FIG. 8, 12 sub-frequency bands are allocated to the total 12 cells #0 cell to # 11 cell.

The 12 sub-frequency bands are classified into three frequency band groups of A to C. Each of three frequency band groups is divided into four sub-frequency bands. In other words, the A frequency band group is divided into four frequency bands of A0 to A3, the B frequency band group is divided into four frequency bands of B0 to B3, and the C frequency band group is divided into four frequency bands of C0 to C3.

As the number of MSSs existing in the #0 cell increases, the #0 cell allocates the first MSS with the sub-frequency band of A0 and the second MSS with the sub-frequency band of A2. In this manner, the #0 cell allocates the last MSS with the sub-frequency band of B3. In addition, as the number of MSSs existing in the #1 increases, the #1 cell allocates the first MSS with the sub-frequency band of A2 and the second MSS with the sub-frequency band of A0. In this manner, the #1 cell allocates the last MSS with the sub-frequency band of B1. In addition, as the number of MSSs existing in the #11 cell increases, the #11 cell, which is the last cell, allocates the first MSS with the sub-frequency band of C3 and the second MSS with the sub-frequency band of C1. In this manner, the #11 cell allocates the last MSS with the sub-frequency band of A0.

In particular, according to the present invention, since frequency resource allocation starts from a cell boundary, the occurrence of ICI is minimized with respect to frequency resources allocated to MSSs existing in the cell boundary, especially when a cell loading rate is at most 1/3, the ICI rarely occurs.

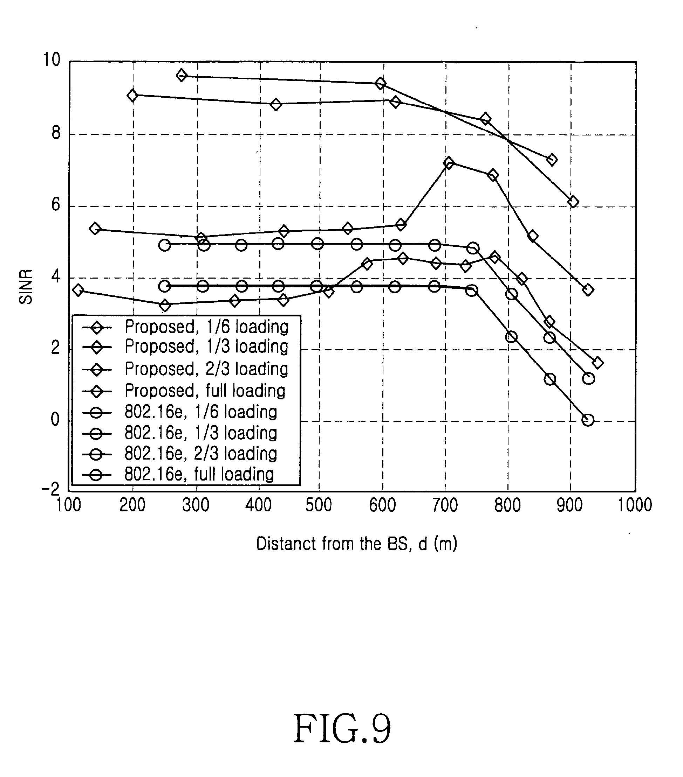

The frequency resource allocation sequence of FIG. 7 is described with reference to FIG.8. When the IEEE 802.16e communication system uses the adaptive reuse partitioning scheme or the fixed frequency reuse partitioning scheme, performance comparison of both cases for an uplink signal to interference and noise ration (SINR) will be described with reference to FIG. 9.

FIG. 9 is a graph illustrating the uplink SINR performance comparison of both cases.

The uplink SINR performance comparison of both cases shown in FIG. 9 is performed under the following simulation conditions:
(1) The number of sub-channels: 48
(2) The number of neighboring cells: 18 (the first tier, the second tier)
(3) The maximum power per sub-carrier: 3[dBm]
(4) A cell radius: 1[km]
(5) Apath loss model: 37.6xlog₁₀(*r*)+16.62(*ITU-Veh*)
(6) A target SINR for power control: 10[dB]

In addition, the uplink SINR performance of the case of using the adaptive reuse partitioning scheme and the case of using the fixed frequency reuse partitioning scheme is measured according to the frequency resource allocation sequence described with reference to FIG. 8. In other words, the uplink SINR performance of the case of using the adaptive reuse partitioning scheme shown in FIG. 9 is measured under the condition that the 48 sub-channels are divided into 12 sub-frequency bands, and the 12 sub-frequency bands are allocated to 18 cells according to the frequency resource allocation sequence described with reference to FIG. 8.

As shown in FIG. 9, the adaptive frequency reuse partitioning scheme newly suggested in the present invention largely varies the uplink SINR performance according to a cell loading rate while the fixed frequency reuse partitioning scheme rarely varies the uplink SINR performance according to the cell loading rate. For example, when the adaptive frequency reuse scheme newly suggested in the present invention is employed in the case of the cell loading rate of at most 1/3, the uplink SINR performance approximates to a target SINR of 10 [dB]. This result shows that the ICI rarely occurs.

In addition, although the adaptive frequency reuse partitioning scheme is employed, a cell loading rate exceeding 1/3 degrades the uplink SINR performance as compared with a cell loading rate of at most 1/3. However, even the adaptive frequency reuse partitioning scheme having the cell loading rate exceeding 1/3 shows a higher uplink SINR performance as compared with the fixed frequency reuse scheme. In other words, it can be understood that, different from the fixed frequency reuse partitioning scheme, the adaptive frequency reuse scheme can achieve an uplink SINR performance gain of about 1[dB] even in a cell boundary.

As described above, according to the present invention, the OFDMA communication system adaptively allocates frequency resources according to the positions of MSSs and cell loading rates, thereby preventing performance degradation in view of the ICI while increasing the degree of the freedom for frequency resource allocation.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims.

## Claims

1. A method for adaptively allocating frequency resources in a communication system using an OFDMA scheme, the method comprising the steps of:
dividing a cell into a plurality of sub-cells corresponding to positions of mobile subscriber stations existing in the cell;
dividing a frequency band used in the communication system into sub-frequency bands corresponding to the number of sub-cells; and
allocating the sub-frequency bands to the sub-cells in such a manner that the sub-cells corresponds to the sub-frequency bands in a ratio of 1:1.

2. The method as claimed in claim 1, wherein, in the step of dividing the cell into a plurality of sub-cells corresponding to positions of mobile subscriber stations, the cell is divided by a number of sub-cells managed by the communication system, and the sub-cells are sequentially allocated to the subscriber stations.

3. The method as claimed in claim 1 or 2, wherein the sub-cells are concentrically aligned about a center of the cell according to the position of the mobile subscriber station.

4. A method for adaptively allocating frequency resources in a communication system using an OFDMA scheme, the method comprising the steps of:
dividing a frequency band used in the communication system by a number of sub-frequency bands; and
allocating one of the sub-frequency bands to each of mobile subscriber stations exiting in a cell according to positions of the mobile subscriber stations.

5. The method as claimed in claim 4, wherein, in the step of allocating one of the sub-frequency bands to each of the mobile subscriber stations exiting in the cell according to positions of the mobile subscriber stations, one of the sub-frequency bands is sequentially allocated to each of the mobile subscriber stations.

6. A method for adaptively allocating frequency resources in a communication system using an OFDMA scheme, the communication system including a plurality of cells using an identical frequency band, the method comprising the steps of:
dividing a frequency band used in the communication system into sub-frequency bands corresponding to the number of cells; and
allocating one of the sub-frequency bands to each of mobile subscriber stations exiting in the cells according to positions of the mobile subscriber stations.

7. The method as claimed in claim 6, wherein in the step of allocating one of sub-frequency bands to each of the mobile subscriber stations exiting in the cells according to positions of the mobile subscriber stations, one of the sub-frequency bands is sequentially allocated to each of the mobile subscriber stations.

8. The method as claimed in claim 7, wherein, in the step of allocating one of sub-frequency bands to each of the mobile subscriber stations exiting in the cells according to positions of the mobile subscriber stations, when a number of the cells is 12, the sub-frequency bands are allocated according to a frequency resource allocation sequence shown in the following table:
| Cell # | Increase of MSS number (cell loading rate) → | | | | | | | | | | | |
|---|---|---|---|---|---|---|---|---|---|---|---|---|
| | cell border ------------------------------------------------------------------------- cell center | | | | | | | | | | | |
| 0 | A0 | A2 | A1 | A3 | C0 | C2 | C1 | C3 | B0 | B2 | B1 | B3 |
| 1 | A2 | A0 | A3 | A1 | C2 | C0 | C3 | C1 | B2 | B0 | B3 | B1 |
| 2 | A1 | A3 | A0 | A2 | C1 | C3 | C0 | C2 | B1 | B3 | B0 | B2 |
| 3 | A3 | A1 | A2 | A0 | C3 | C1 | C2 | C0 | B3 | B1 | B2 | 80 |
| 4 | C0 | C2 | C1 | C3 | A0 | A2 | A1 | A3 | C0 | C2 | C1 | C3 |
| 5 | C2 | C0 | C3 | C1 | A2 | A0 | A3 | A1 | C2 | C0 | C3 | C1 |
| 6 | C1 | C3 | C0 | C2 | A1 | A3 | A0 | A2 | C1 | C3 | C0 | C2 |
| 7 | C3 | C1 | C2 | C0 | A3 | A1 | A2 | A0 | C3 | C1 | C2 | C0 |
| 8 | C0 | C2 | C1 | C3 | A0 | A2 | A1 | A3 | A0 | A2 | A1 | A3 |
| 9 | C2 | C0 | C3 | C1 | A2 | A0 | A3 | A1 | A2 | A0 | A3 | A1 |
| 10 | C1 | C3 | C0 | C2 | A1 | A3 | A0 | A2 | A1 | A3 | A0 | A2 |
| 11 | C3 | C1 | C2 | C0 | A3 | A1 | A2 | A0 | A3 | A1 | A2 | A0 |

9. An apparatus for adaptively allocating frequency resources in a communication system using an OFDMA scheme, wherein said apparatus is adapted to operate according to one of claims 1 to 8.
